# EUROPÄISCHE PATENTSCHRIFT

(11) **EP 0 977 898 B1**
(45) Veröffentlichungstag und Bekanntmachung des Hinweises auf die Patenterteilung: **31.10.2001**
(21) Anmeldenummer: 98920499.5
(22) Anmeldetag: 02.04.1998
(51) Int. Cl.: C22B 7/00, C22B 11/02, F25D 3/10

(54) **VERFAHREN ZUR KÜHLUNG VON STÜCKIGEM ODER KÖRNIGEM GUT SOWIE VORRICHTUNG ZUR DURCHFÜHRUNG DES VERFAHRENS**
METHOD FOR COOLING MATERIAL CHUNKS OR GRAINS AND DEVICE FOR CARRYING OUT SAID METHOD
PROCEDE ET DISPOSITIF DE REFROIDISSEMENT DE MATERIAU EN MORCEAUX OU EN GRAINS

(30) Priorität: 23.04.1997 DE 19717006
(43) Veröffentlichungstag der Anmeldung: 09.02.2000
(73) Patentinhaber: DaimlerChrysler AG, 70567 Stuttgart (DE)
(72) Erfinder: MELCHINGER, Jörg, D-70569 Stuttgart (DE); JAKOB, Ralf, D-76307 Karlsbad (DE); MELCHIORRE, Michele, D-89134 Blaustein (DE); PFITSCHER, Joachim, D-89081 Ulm (DE)
(86) Internationale Anmeldenummer: EP9801923
(87) Internationale Veröffentlichungsnummer: WO9848064

(56) Entgegenhaltungen:
- DE-A- 1 778 559
- DE-A- 2 233 255
- DE-A- 2 236 791
- DE-A- 2 550 958
- DE-A- 2 613 298
- DE-A- 4 106 599
- DE-A- 4 304 675
- DE-C- 19 518 277
- GB-A- 1 482 908
- US-A- 5 456 738

## Beschreibung

Die Erfindung betrifft ein Verfahren zur Kühlung von stückigem oder kömigem Gut sowie eine Vorrichtung zur Durchführung des Verfahrens. Ein solches Verfahren beziehungsweise eine solche Vorrichtung sind bereits aus [1] bekannt

Verfahren und Vorrichtungen dieser Art dienen beispielsweise dem Verspröden oder Verfestigen industrieller Produkte, die anschließend getrennt, zerkleinert oder gemahlen werden sollen. Insbesondere werden die Zerkleinerungs- und Mahlprozesse durch eine Versprödung der Produkte erleichtert und so wird der Energiebedarf für derartige Prozesse minimiert.

Besonders vorteilhaft erweist sich eine solche Kühlung vor der Zerkleinerung von mehrkomponentigen Produkten wie beispielsweise Elektronikschrott. Elektronikschrott besteht aus sehr unterschiedlichen Werkstoffen, beispielsweise aus Metallen und Kunststoffen, wobei häufig letztere zumindest teilweise zum Zwecke des Flammschutzes halogeniert sind. Ein Recycling dieser verschiedenartigen Materialien erfordert zunächst deren Aufschluß, also eine Zerkleinerung des Verbundmaterials. Infolge einer starken Abkühlung, beispielsweise auf die Temperatur von flüssigem Stickstoff, treten zum einen thermische Spannungen zwischen den verschiedenen Materialien auf, die deren Aufschluß erleichtern. Zum anderen verspröden die Kunststoffe während Metalle wie beispielsweise Kupfer oder Aluminium zäh bleiben, wodurch eine selektive Zerkleinerung gefördert wird. Zum dritten minimiert die Kühlung, die ansonsten bei der Zerkleinerung von Elektronikschrott infolge der starken Materialerwärmung auftretende Umweltbelastung durch die Entstehung von Dioxinen und Furanen aus den halogenhaltigen Kunststoffen und anderen halogenhaltigen Bestandteilen. Die Entstehung solcher umweltbelastender Stoffe wird unter einer Inertgasatmosphäre, beispielsweise einer Atmosphäre aus verdampften Stickstoff, weitergehend minimiert oder vollständig unterbunden.

Bekannte Verfahren für die Zerkleinerung von mehrkomponentigen Verbunden wie zum Beispiel Altbatterien werden kontinuierlich durchgeführt und entsprechend sind die gegebenenfalls hilfreichen Verfahren oder Vorrichtungen zur Kühlung des zu zerkleinernden Verbundmaterials ebenfalls für einen kontinuierlichen Materialdurchlauf und Betrieb konzipiert [1, 2]. Das Experiment zeigt jedoch, daß viele mehrkomponentige Verbundmaterialien, beispielsweise Elektronikschrott, selektiv zerkleinert werden können [3]. Die Kunststoffbestandteile des Elektronikschrotts werden bereits nach kurzer Beanspruchungsdauer stark zerkleinert, während die meisten metallischen Bestandteile noch wesentlich größere Abmessungen besitzen [3]. Für Recyclingbelange ist eine solche selektive Zerkleinerung vorteilhaft, da zum einen der notwendige Aufschluß zwischen den verschiedenen Verbundmaterialien ausreichend effektiv erfolgt, und zum anderen ein großer Anteil der metallischen Wertstofffraktion mit vergleichsweise einfach zu sortierenden großen Partikelabmessungen vorliegt. Die selektive Zerkleinerung erfordert aber, anders als bei herkömmlichen Verfahren, die bis zum Erreichen einer eher einheitlichen Partikelgröße von Kunststoff- und Metallbestandteilen zerkleinern, einen chargenweisen, also diskontinuierlichen Betrieb, bei dem das Verbundmaterial nur für einen definierten Zeitraum der Zerkleinerungsbeanspruchung unterzogen und dann mit noch stark unterschiedlichen Partikelabmessungen aus der Zerkleinerungsvorrichtung entfernt wird. Eine der Zerkleinerungsvorrichtung vorgeschaltete Kühlvorrichtung wird bei einer ökonomischen Betrachtungsweise demnach im Gegensatz zu den herkömmliche Kühlvorrichtungen genauso wie die Zerkleinerunsvorrichtung chargenweise, also diskontinuierlich betrieben und spart dadurch gegenüber kontinuierlich betriebenen Kühlvorrichtungen zusätzlich Energie und Kühlmittel, da nicht über einen optimierten Zeitraum hinaus gekühlt wird.

Darüber hinaus ist die stark variierende Temperaturabhängigkeit des Zerkleinerungsverhaltens der verschiedenen Verbundmaterialien zu beachten. Daraus ergibt sich einerseits, daß für die Durchführung einer ausreichend selektiven Zerkleinerung eine möglichst homogene Temperaturverteilung innerhalb des zu zerkleinernden Partikelgemisches der verschiedenen Verbundmaterialien erforderlich ist. Anderenfalls kann es vorkommen, daß verschiedene Materialien nicht mehr wie gewünscht ein unterschiedliches Zerkleinerungsverhalten zeigen, also selektiv zerkleinert werden, sondern auf Grund von unterschiedlicher Temperatur ein ähnliches Zerkleinerungsverhalten zeigen und unselektiv zerkleinert werden. Andererseits führt eine inhomogene Temperaturverteilung innerhalb des zu zerkleinernden Partikelgemisches der verschiedenen Verbundmaterialien zu einem ungleichmäßigen Aufschluß der verschiedenen Verbundkomponenten, wodurch eine nachgeordnete Sortierung wesentlich erschwert wird.

Ein weiteres wesentliches Kriterium für die Gewährleistung einer ausreichenden Selektivität bei der Zerkleinerung einer gegebenen Menge an Verbundmaterial besteht darin, daß die gesamte Menge des Verbundmaterials für einen einheitlichen, definierten Zeitraum der Zerkleinerungsbeanspruchung unterzogen wird. Um dies zu ermöglichen, muß die gesamte Menge des Verbundmaterials möglichst zu einem Zeitpunkt oder zumindest innerhalb eines sehr kurzen Zeitraums der Zerkleinerungsvorrichtung zugeführt werden. Dies erfordert neben dem diskontinuierlichen der vorgeschalteten Kühlvorrichtung vor allem deren diskontuierliche Entleerung.

In [4] wird ein Verfahren zur Altmaterialaufbereitung beschrieben, welches einen Verfahrensschritt zur Kühlung des Altmaterials beinhaltet, bei dem das Altmaterial in Kübeln diskontinuierlich einer geschlossenen, isolierten Kühlkammer zugeführt wird. In der Kühlkammer werden die Kübel mit einem tiefsiedenden, verflüssigten Gas bis zum Erreichen einer vorgegebenen Temperatur übersprüht und so gekühlt. Die Temperatur wird außerhalb der Kübel gemessen. Über die Ausgestaltung der Kübel werden keine Angaben gemacht. Nach der Kühlung werden die Kübel mitsamt dem Altmaterial wieder der Kühlkammer entnommen und dann werden die Kübel in eine Zerkleinerungseinrichtung entleert.

In [5] wird eine Vorrichtung für die Zufuhr und Kühlung von körnigem Material beschrieben, die einen Kühlschacht enthält und darüber angebracht eine Radschleuse für dessen Befüllung. Im oberen Teil des Kühlschachtes ist ein Füllstandanzeiger befestigt. Dieser dient dazu, die Materialzufuhr über die Radschleuse zu stoppen, sobald der durch ihn vorgegebene Füll-Level erreicht ist. Im unteren Teil des Kühlschachtes befinden sich eine oder mehrere Zuführungen für ein tiefsiedendes, verflüssigtes Gas. Angaben über den Verfahrensablauf in dieser Kühlvorrichtung werden nicht getroffen.

Die Aufgabe der vorliegenden Erfindung besteht daher darin, zum einen ein Verfahren anzugeben, mit dem stückiges oder körniges Gut mit möglichst geringem Energie-, Zeit- und Kühlmittelaufwand möglichst homogen gekühlt werden kann beziehungsweise zum anderen eine Vorrichtung anzugeben, mit der dieses zu schaffende Verfahren mit möglichst geringem konstruktiven Aufwand durchgeführt werden kann.

Die Erfindung ist in Bezug auf das zu schaffende Verfahren durch die Merkmale des Patentanspruchs 1 wiedergegeben und in Bezug auf die zu schaffende Vorrichtung durch die Merkmale des Patentanspruchs 10. Die weiteren Ansprüche enthalten vorteilhafte Ausgestaltungen und Weiterbildungen des erfindungsgemäßen Verfahrens (Patentansprüche 2 bis 9) beziehungsweise der erfindungsgemäßen Vorrichtung (Patentansprüche 11 bis 23).

Die Aufgabe wird bezüglich des Verfahrens erfindungsgemäß dadurch gelöst, daß
a) das stückige oder körnige Gut einem Kühlschacht diskontinuierlich zugeführt wird und
b) dosiert wird derart daß in einer Dosiereinrichtung eine Dosis zusammengestellt wird, und
c) in wenigstens einem Teil des Kühlschachtes wenigstens zeitweise mit Hilfe von tiefsiedendem, verflüssigtem Gas gekühlt wird,
   wobei,
d) die Dosierung und die Kühlung des stückigen oder körnigen Gutes räumlich getrennt werden aber dabei zeitlich parallel erfolgen, und
e) die Dosierung der zuzuführenden Menge des stückigen oder körnigen Gutes mittels einer Regeleinrichtung frei wählbar eingestellt wird, und
f) die Kühlung
   mit Hilfe von einem oder mehreren tiefsiedenden, verflüssigten Gasen erfolgt.

Diese Ausgestaltung der Erfindung weist gegenüber dem Stand der Technik die nachfolgend beschriebenen Vorteile auf:

Die räumliche Trennung von Dosierung und Kühlung ermöglicht deren zeitliche Parallelität derart, daß jeweils eine definierte Menge des stückigen oder körnigen Gutes dosiert und dann dem Kühlschacht zugeführt wird. Dort wird diese Dosis gekühlt während in der Dosiereinrichtung bereits eine andere Dosis zusammengestellt wird. Mittels dieser Verfahrensweise kann der Durchsatz des Kühlschachtes gegenüber einem Verfahren, bei dem Dosierung und Kühlung zeitlich nacheinander ablaufen, beträchtlich erhöht werden.

Durch die Wahlmöglichkeit zwischen der Verwendung von einem oder mehreren tiefsiedenden, verflüssigten Gasen für die Kühlung des stückigen oder körnigen Gutes kann der Kühlprozeß weiter optimiert werden in Hinsicht auf die Erfordernisse des zu kühlenden Gutes und des Nachfolgeprozesses, da verschiedene Gase für die Kühlung eines bestimmten Materials auf eine bestimmte Temperatur unterschiedlich gut (physikalisch, ökonomisch, ökologisch) geeignet sind.

Geeignete Maße der Menge, die mit der Regeleinrichtung frei geregelt werden soll, sind beispielsweise das Gewicht oder das Volumen. Deren Vorteile liegen in ihrer einfachen Bestimmbarkeit. Die Bestimmung des Gewichtes ist allerdings für Anwendungen vorzuziehen, bei denen das stückige oder körnige Gut bei der Befüllung der Dosiereinrichtung zu Brückenbildung neigt und somit eine Bestimmung des Volumens zu Fehldosierungen führen würde.

In einer weiteren vorteilhaften Ausgestaltung der Erfindung wird das stückige oder körnige Gut innerhalb des Kühlschachtes allein aufgrund der zumindest anteilig in der Transportrichtung wirkenden Schwerkraft transportiert. Der Vorteil dieser Ausgestaltung liegt in dem völligen Verzicht auf zusätzliche Fördermittel innerhalb des Kühlschachtes.

Innerhalb des Kühlschachtes durchläuft das stückige oder körnige Gut mehrere separierbare Kammern und wird vorzugsweise in einer oder mehreren der Kammern auf der Zugabeseite des Kühlschachtes mittels dampfförmigem, tiefsiedendem Kühlgas vorgekühlt und wird vorzugsweise in einer oder mehreren der Kammern auf der Ausgabeseite des Kühlschachtes mittels verflüssigtem, tiefsiedendem Kühlgas auf die gewünschte Ausgabetemperatur gekühlt. Für eine besonders vorteilhafte Ausgestaltung des Verfahrens wird der bei der Kühlung in den Kammern auf der Ausgabeseite des Kühlschachtes verdampfende Anteil des verflüssigten, tiefsiedenden Kühlgases in die Kammern auf der Zugabeseite des Kühlschachtes geleitet und zum Vorkühlen des stückigen oder kömigen Gutes verwendet. Der Vorteil dieser Ausgestaltung beruht einerseits auf der drastischen Reduzierung der benötigten Kühlmittelmenge. Andererseits gewährleistet die mehrstufige Kühlung des stückigen oder körnigen Gutes im Vergleich zu einer einstufigen Kühlung die Einstellung einer homogeneren Temperaturverteilung innerhalb der Materialmenge. Eine homogene Temperaturverteilung innerhalb der Materialmenge ist insbesondere für deren selektive Zerkleinerung vorteilhaft.

In Hinsicht auf die Kühlung von Elektronikschrott als geeignete Vorbereitung für dessen selektive Zerkleinerung hat sich Stickstoff als besonders vorteilhaftes, tiefsiedendes Kühlgas erwiesen. Wenn der flüssige Stickstoff seine Verdampfungswärme aus dem Elektronikschrott aufgenommen hat, ist der gasförmige Stickstoff immer noch in der Lage bis zum Erreichen von Raumtemperatur nochmals mehr als die gleiche Wärmemenge aufzunehmen.

In einer vorteilhaften Weiterbildung der Erfindung wird eine Dosis des stückigen oder körnigen Gutes in wenigstens einem Teil des Kühlschachtes wenigstens zeitweise mit Hilfe von einem zweiten zusätzlichen tiefsiedenden, verflüssigten Gas gekühlt. Der Vorteil einer derartigen Weiterbildung besteht darin, daß verschiedene Gase für die Kühlung auf eine bestimmte Temperatur unterschiedlich gut (physikalisch, ökonomisch, ökologisch) geeignet sind und auf dieses Art und Weise die einzelnen Stufen der mehrstufigen Kühlung optimiert werden können.

Eine weitere besonders vorteilhafte Ausgestaltung des Verfahrens besteht darin, daß die Ausgabetemperatur in Hinsicht auf die Art des stückigen oder körnigen Gutes optimiert und geregelt wird, wozu die momentane Temperatur des Gutes kontinuierlich in der Nähe der Ausgabeöffnung des Kühlschachtes gemessen wird und verflüssigtes Kühlgas zugeführt wird, bis die Differenz der Ist- und Sollwerte der Guttemperatur einen frei einstellbaren optimalen Minimalwert unterschreitet und erst dann die Kühlschachtausgabe geöffnet wird. Diese Ausgestaltung erlaubt die Optimierung des Energie- und Kühlmittelverbrauchs auf einen notwendigen aber auch minimalen Wert.

Die vorgenannte Aufgabe wird bezüglich der Vorrichtung erfindungsgemäß dadurch gelöst, daß die Vorrichtung zur Kühlung von stückigem oder körnigem Gut enthält
a) eine Dosiereinrichtung zur Zusammenstellung einer Dosis des Gutes,
b) einen Kühlschacht, mit zumindest anteilig vertikaler Ausrichtung,
c) beide geeignet zur Aufnahme des stückigen oder kömigen Gutes
wobei
a) die Dosiereinrichtung und der Kühlschacht räumlich getrennt sind,
b) und die Vorrichtung zusätzlich enthält
   eine Regeleinrichtung zur frei einstellbaren Dosierung der zuführenden Menge des stückigen oder körnigen Gutes,
c) und auf der Ausgabeseite des Kühlschachtes eine oder mehrere Zuführungen
   für ein oder mehrere tiefsiedende, verflüssigte Gase.

Eine derartige Kombination von Vorrichtungsmerkmalen zeichnet sich durch ihre gute Funktionalität in Hinsicht auf die Durchführung des zu schaffenden Kühlverfahrens und durch besonders einfache Konstruktion aus.

In einer vorteilhaften Ausgestaltung dieser Vorrichtung beinhaltet die genannte Dosiereinrichtung eine Wägeeinrichtung, wobei letztere vorzugsweise mit der Regeleinrichtung elektronisch verbunden ist und die Regeleinrichtung die Befüllung der Dosiereinrichtung mit dem stückigen oder körnigen Gut bis zum Erreichen der frei vorgebbaren Menge von Gewichtskrafteinheiten automatisch regelt. Die Vorteile dieser Ausgestaltung liegen in ihrer einfachen Bau- und Funktionsweise sowie der Minimierung von notwendiger manueller Bedienung.

Vorzugsweise ist die genannte Dosiereinrichtung ohne mechanischen Kontakt direkt über der Eintrittsöffnung des Kühlschachtes angeordnet. Anderenfalls kann die Funktion der Wägeeinrichtung durch mechanische Störungen beeinträchtigt werden, die im Betrieb des Kühlschachtes auftreten können.

In einer weiteren vorteilhaften Ausgestaltung dieser Vorrichtung beinhaltet die genannte Dosiereinrichtung eine Meßeinrichtung zur Bestimmung des Schüttgutvolumens, wobei die Volumenmeßeinrichtung vorzugsweise als Füllstandsanzeiger ausgebildet ist und mit der Regeleinrichtung elektronisch verbunden ist und die Regeleinrichtung die Befüllung der Dosiereinrichtung mit dem stückigen oder körnigen Gut bis zum Erreichen einer frei vorgebbaren Menge von Volumeneinheiten automatisch regelt. Die Vorteile dieser Ausgestaltung liegen ebenfalls in ihrer einfachen Bau- und Funktionsweise sowie der Minimierung von notwendiger manueller Bedienung.

Die beiden letztgenannten vorteilhaften Ausgestaltungen der erfindungsgemäßen Vorrichtung erlauben insbesondere den zeitlich und energetisch optimierten Betrieb einer Vorrichtung für die Zerkleinerung von mehrkomponentigen Verbunden, speziell von Elektronikschrott, bei gleichzeitig minimiertem manuellen Arbeitsaufwand.

Weitere vorteilhafte Ausgestaltungsmerkmale der genannten Vorrichtung bestehen darin, daß der Kühlschacht an seiner Zugabe- und an seiner Ausgabeöffnung mit Verschlüssen versehen ist, wobei die Verschlüsse vorzugsweise als Schieber ausgebildet sind, deren Ein- oder Ausfahren automatisch erfolgt und elektronisch regelbar ist; sowie daß das Baumaterial zumindest eines Teils der Kühlschachtwandung eine geringe Wärmeleitfähigkeit vergleichbar einer Temperaturisolierung besitzt oder zumindest ein Teil der Kühlschachtwandung eine zusätzliche Temperaturisolierung aufweist, wobei unter dem Begriff Kühlschachtwandung auch die Verschlüsse an der Zugabe- und an der Ausgabeöffnung zu verstehen sind. Die Vorteile dieser Ausgestaltung liegen in der unter konstruktiven Gesichtspunkten besonders einfachen Erfüllung der Anforderungen der Aufgabenstellung, insbesondere hinsichtlich der Diskontinuität der Kühlung.

Weitere vorteilhafte Ausgestaltungsmerkmale der genannten Vorrichtung bestehen darin, daß der Kühlschacht einen rechteckigen Querschnitt sowie einen oder mehrere Schieber besitzt, die eine Aufteilung des Kühlschachtes in mehrere separate Kammern ermöglichen und deren En- oder Ausfahren automatisch erfolgt und elektronisch regelbar ist, wobei die Bewegung sowohl dieser Aufteilungs- als auch der vorgenannten Verschluß-Schieber pneumatisch, hydraulisch, magnetisch oder elektrisch mittels Schrittmotoren erfolgt. Die Vorteile dieser Ausgestaltung ergeben sich einerseits aus der einfachen Konstruktion und Regelung, sowie andererseits aus der gleichmäßigen Vergrößerung des durchgängigen Kühlschachtquerschnitts während des Ausfahrens der Schieber und dem damit korrespondierenden gleichmäßig beschleunigten und störungsarmen Schüttguttransport zwischen aufeinanderfolgenden Kammern beziehungsweise aus der Kühlschachtausgabe heraus.

Weitere vorteilhafte Ausgestaltungsmerkmale der genannten Vorrichtung bestehen einerseits darin, daß sich in einer oder mehreren der Kammern auf der Ausgabeseite des Kühlschachtes jeweils eine oder mehrere Zuführungen zur Einbringung des verflüssigten Kühlgases und jeweils ein Temperatursensor befinden, sowie eine Austrittsöffnung für das bei der Kühlung verdampfende Kühlgas, welches über eine Zuleitung in die nächst höhergelegene Kammer ohne Flüssiggaskühlung geleitet wird und dort in Form eines dampfförmigen Kühlgases eine Vorkühlung bewirkt, sowie andererseits darin, daß sich in einer oder mehreren der Kammern auf der Zugabeseite des Kühlschachtes jeweils eine im unteren Bereich der Kammer angeordnete Zuführung zur Einbringung des dampfförmigen Kühlgases befindet sowie im oberen Bereich eine Austrittsöffnung, die über eine Zuleitung zur nächsthöheren Kammer führt oder im Falle der obersten Kammer als Expansionsöffnung dient. Der Vorteil dieser Ausgestaltung besteht in der Minimierung des Kühlgasbedarfs.

Ein besonders vorteilhaftes Ausgestaltungsmerkmal der genannten Vorrichtung besteht darin, daß der oder die Temperatursensoren, die Zuführungen für das verflüssigte Kühlgas und die automatisch verfahrbaren Schieber sowie die Dosiereinrichtung über eine elektronische Regeleinrichtung miteinander verbunden sind, weiche die Zufuhrmenge und Zufuhrzeit des verflüssigten Kühlgases und die Zugabemenge und Zugabezeit des Schüttgutes sowie die Öffnungs- und Schließzeitpunkte der Schieber in Abhängigkeit von der vorgewählten Sollausgabetemperatur des Schüttgutes regelt. Der Vorteil dieser Ausgestaltung besteht in der Optimierung des Energie- und Kühlgasbedarfs bei gleichzeitiger Minimierung des manuellen Arbeitsaufwandes.

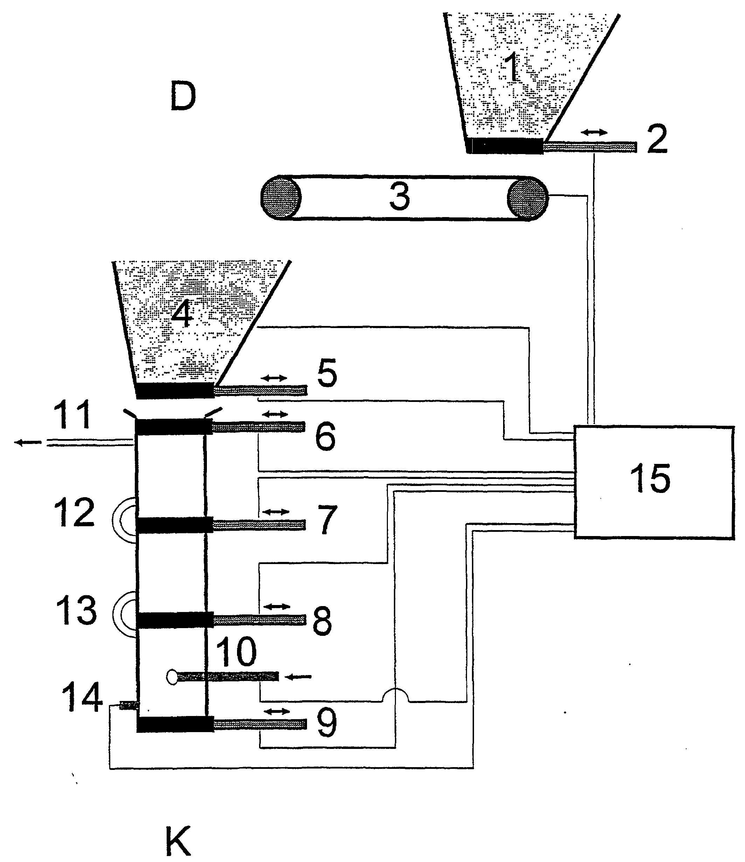

Im Folgenden wird anhand der Figur eine beispielhafte Ausführung des erfindungsgemäßen Verfahrens und eine beispielhafte Ausgestaltung der erfindungsgemäßen Vorrichtung näher erläutert.

Die Figur stellt schematisch eine Vorrichtung zur Kühlung von stückigem oder körnigem Gut dar, die enthält
a) eine Dosiereinrichtung D zur Zusammenstellung einer Dosis des Gutes,
b) einen Kühlschacht K, mit zumindest anteilig vertikaler Ausrichtung,
c) beide geeignet zur Aufnahme des stückigen oder körnigen Gutes
wobei
d) die Dosiereinrichtung D und der Kühlschacht K räumlich getrennt sind,
e) und die Vorrichtung zusätzlich enthält
   eine Regeleinrichtung 15 zur frei einstellbaren Dosierung der zuzuführenden Menge des stückigen oder kömigen Gutes, und
f) auf der Ausgabeseite des Kühlschachtes K eine oder mehrere Zuführungen 10
   für ein oder mehrere tiefsiedende, verflüssigte Gase.

Die Dosiereinrichtung D besteht aus einem Sammelbehälter 1, der mittels eines Schiebers 2 verschließbar ist, wobei dessen Ein- oder Ausfahren automatisch erfolgt und elektronisch über die Regeleinrichtung 15 geregelt wird, sowie aus einem Förderband 3, dessen Fördergeschwindigkeit ebenfalls über die Regeleinrichtung 15 geregelt wird, sowie aus der Wägeeinrichtung 4, die ebenfalls mit der Regeleinrichtung 15 elektronisch verbunden ist und die über einen Schieber 5 verschließbar ist, wobei dessen Ein- oder Ausfahren hydraulisch automatisch erfolgt und elektronisch über die Regeleinrichtung 15 geregelt wird.

Die Dosiereinrichtung D, insbesondere die Wägeeinrichtung steht nicht in mechanischem Kontakt zum Kühlschacht K.

Mittels dieser elektronisch geregelten Dosiereinrichtung D wird zu einem verfahrensoptimierten Zeitpunkt eine verfahrensoptimierte Menge an Schüttgut in den Kühlschacht K eingegeben. Hierzu veranlaßt die Regeleinrichtung 15 das Förderband 3 bis zum Erreichen der verfahrensoptimierten Beladung der Wägeeinrichtung 4 Schüttgut in diese zu transportieren und dann zu stoppen sowie den Schieber 5 bei Erreichen des verfahrensoptimierten Zeitpunktes zu öffnen.

Die Dosierung einer verfahrensoptimierten Menge an Schüttgut in der Dosiereinrichtung D erfolgt zeitlich parallel zur Vorkühlung und Kühlung anderer verfahrensoptimierter Mengen im Kühlschacht K. Die gegenüber einem zeitlich nacheinander ablaufendem Verfahren eingesparte Zeit wird für eine (nachfolgend beschriebene) mehrstufige Kühlung verwendet. Dies gewährleistet einen hohen Durchsatz der Vorrichtung bei gleichzeitiger hoher Homogenität der Temperaturverteilung des aus dem Kühlschacht K ausgegebenen Schüttgutes.

Der Kühlschacht K ist senkrecht ausgerichtet, er besitzt einen rechteckigen Querschnitt und an seiner Schüttgutzugabe einen Verschlußschieber 6 sowie an seiner Schüttgutausgabe einen Verschlußschieber 9, sowie zwei weitere Schieber 7 und 8, deren aller Ein- oder Ausfahren hydraulisch automatisch erfolgt und elektronisch über die Regeleinrichtung 15 regelbar ist Im Folgenden beziehen sich die Ortsangaben zugabe- und ausgabeseitig auf den Weg des Schüttgutes innerhalb des Kühlschachtes K. In der zwischen den Schiebern 8 und 9 gebildeten Kühlschachtkammer befindet sich zentral angeordnet eine Zuführung 10 für das verflüssige Kühlgas Stickstoff sowie ausgabeseitig an der Kühlschachtwandung angeordnet ein Temperatursensor 14 sowie zugabeseitig an der Kühlschachtwandung angeordnet eine Austrittsöffnung für den bei der Kühlung verdampfenden Stickstoff, die über die Zuleitung 13 ausgabeseitig in der Wandung der Kammer zwischen den Schiebern 7 und 8 mündet In dieser Kammer befindet sich ebenfalls zugabeseitig angeordnet eine Austrittsöffnung für den Stickstoff, die über die Zuleitung 12 ausgabeseitig in der Wandung der Kammer zwischen den Schiebern 6 und 7 mündet. In dieser Kammer befindet sich ebenfalls zugabeseitig angeordnet eine Austrittsöffnung 11 für den Stickstoff. Der Temperatursensor 14 und die Stickstoffzuleitung 10 sind mit der Regeleinrichtung 15 elektronisch verbunden, wobei letztere die Zufuhrmenge und -zeit des Stickstoffs regelt und optimal an die Verfahrenserfordernisse anpaßt.

Eine verfahrensoptimierte Menge Schüttgut wird in die oberste Kammer des Kühlschachtes K gegeben und dann zeitversetzt in die darunter befindlichen Kammern weitergeführt. in der ausgabeseitigen Kammer wird flüssiger Stickstoff zur Kühlung zugeführt. Die Zufuhrmenge und Zufuhrzeit wird mittels der Regeleinrichtung 15 so geregelt, daß das Schüttgut zu einem verfahrensoptimierten Zeitpunkt eine verfahrensoptimierte Temperatur angenommen hat. Hierzu wird die Isttemperatur ständig mittels des Temperatursensors 14 mit der Solltemperatur verglichen.

Nach dem Anlauf des Verfahrens sind alle Kammern des Kühlschachtes K mit jeweils einer verfahrensoptimierten Menge des Schüttgutes befüllt. Dies trifft für jeden späteren Zeitpunkt zu, mit Ausnahme des nachfolgend beschriebenen Materialtransportes.

Der Materialtransport erfolgt diskontinuierlich, indem die Regeleinrichtung 15 den Ausgabeschieber 9 zu einem verfahrensoptimierten Zeitpunkt dazu veranlaßt die Ausgabekammer zu öffnen, wodurch das Schüttgut mit verfahrensoptimierter Temperatur entleert wird. Danach veranlaßt die Regeleinrichtung 15 den Ausgabeschieber 9 zu schließen und den Schieber 8 zu öffnen, wodurch das Schüttgut aus dieser Kammer in die Ausgabekammer fällt. Entsprechend wiederholt sich dieser Vorgang mit der Zugabekammer und der darunter befindlichen Kammer sowie mit der Dosiereinrichtung D und der Zugabekammer. Die Befüllung der Dosiereinrichtung D erfolgt während der Kühlung einer vorhergegangenen Charge des Schüttgutes.

Die Kühlung des Schüttgutes erfolgt diskontinuierlich und stufenweise. In der obersten Kammer des Kühlschachtes K wird mit verhältnismäßig warmem, gasförmigem Stickstoff auf eine Temperatur unterhalb der Umgebungstemperatur vorgekühlt, in der darunter befindlichen Kammer wird mit kälterem gasförmigem Stickstoff weiter vorgekühlt und in der Ausgabekammer wird mit sehr kaltem flüssigem Stickstoff auf die Solltemperatur abgekühlt. Dabei wird der in der Ausgabekammer verdampfende Stickstoff über die Leitungen 13 und 12 in die jeweils höheren Kammern geführt und zur Vorkühlung eingesetzt sowie über die Austrittsöffnung 11 aus dem Kühlschacht K geführt. Die verschiedenen Stufen der Kühlung erfolgen zeitlich parallel in den unterschiedlichen Kammern des Kühlschachtes K an jeweils einer anderen verfahrensoptimierten Menge des Schüttgutes. Eine solche mehrstufige Kühlung des Schüttgutes gewährleistet gegenüber einer einstufigen Kühlung eine deutliche Verbesserung der Homogenität der Temperaturverteilung des aus der Austrittsöffnung 11 aus dem Kühlschacht K ausgegebenen Schüttgutes. Der dafür benötigte höhere Zeitaufwand wird durch den zeitlich parallelen Ablauf von Schüttgutdosierung und Kühlung wieder eingespart.

Das erfindungsgemäße Verfahren samt Vorrichtung erweist sich in der Ausführungsform dieses Beispiels als besonders geeignet für die notwendige Kühlung von Elektronikschrott vor dessen selektiver Zerkleinerung.

Die Erfindung ist nicht nur auf das zuvor geschilderte Ausführungsbeispiel beschränkt, sondern vielmehr auf weitere übertragbar.

So ist zum Beispiel denkbar, anstatt des Kühlgases Stickstoff das Kühlgas Kohlendioxid zu verwenden oder auch halogenfreie tiefsiedende Kohlenwasserstoffe, beispielsweise Methan, Ethan oder Propan, aber auch Cyclopropan, Propylen oder ähnliche sowie Mischungen aus diesen.

Ferner ist es möglich, daß die Menge des stückigen oder körnigen Gutes, beispielsweise bei einem Gut mit ausreichend großen Abmessungen, nicht über die Gewichstkraft oder das Volumen des Gutes bestimmt wird, sondern direkt über dessen Stückzahl. In einem solchen Fall wäre die Dosiereinrichtung vorzugsweise mit einer optischen Erkennungseinrichtung versehen.

Schließlich ist es vorstellbar, daß für die Verschlüsse an der Zugabe- und an der Ausgabeöffnung des Kühlschachtes und/oder für Aufteilung des Kühlschachtes in einzelne Kammern keine Schieber verwendet werden, sondern Klappen, deren Öffnen oder Schließen automatisch erfolgt und vorzugsweise elektronisch geregelt ist.

### Literatur

[1] DE 43 04 675 A1
[2] DE 41 06 599 A1
[3] DE 195 18 277 C1
[4] DE-A-2550958
[5] GB-A-1482908

## Patentansprüche

1. Verfahren zur Kühlung von stückigem oder körnigem Gut, bei dem
a) das stückige oder körnige Gut einem Kühlschacht (K) diskontinuierlich zugeführt wird und
b) dosiert wird, derart,
daß in einer Dosiereinrichtung (D) eine Dosis zusammengestellt wird,
und
c) in wenigstens einem Teil des Kühlschachtes (K) wenigstens zeitweise
mit Hilfe von tiefsiedendem, verflüssigtem Gas gekühlt wird,
wobei
d) die Dosierung und die Kühlung des stückigen oder körnigen Gutes räumlich getrennt werden aber dabei zeitlich parallel erfolgen, und
e) die Dosierung der zuzuführenden Menge des stückigen oder körnigen Gutes mittels einer Regeleinrichtung (15) frei wählbar eingestellt wird, und
f) die Kühlung
mit Hilfe von einem oder mehreren tiefsiedenden, verflüssigten Gasen erfolgt.

2. Verfahren nach Anspruch 1,
**dadurch gekennzeichnet,**
**daß** die Menge des stückigen oder kömigen Gutes über ihr Gewicht bestimmt wird

3. Verfahren nach Anspruch 1,
**dadurch gekennzeichnet,**
**daß** die Menge des stückigen oder körnigen Gutes über ihr Volumen bestimmt wird.

4. Verfahren nach einem der vorhergehenden Ansprüche,
**dadurch gekennzeichnet,**
**daß** das stückige oder körnige Gut innerhalb des Kühlschachtes (K) mehrere separierbare Kammern durchläuft und in einer oder mehreren der Kammern auf der Zugabeseite des Kühlschachtes (K) mittels eines ersten dampfförmigen Kühlgases vorgekühlt wird.

5. Verfahren nach Anspruch 4,
**dadurch gekennzeichnet,**
**daß** das stückige oder kömige Gut in einer oder mehreren der Kammern auf der Ausgabeseite des Kühlschachtes (K) mittels eines zweiten verflüssigten, tiefsiedenden Kühlgases gekühlt wird.

6. Verfahren nach einem der Ansprüche 4 oder 5,
**dadurch gekennzeichnet,**
**daß** der bei der Kühlung verdampfte Anteil des verflüssigten, tiefsiedenden Kühlgases zum Vorkühlen des stückigen oder körnigen Gutes in einer oder mehreren der Kammern auf der Zugabeseite des Kühlschachtes (K) verwendet wird.

7. Verfahren nach einem der vorhergehenden Ansprüche,
**dadurch gekennzeichnet,**
**daß** als verflüssigtes, tiefsiedendes Gas Stickstoff verwendet wird.

8. Verfahren nach einem der vorhergehenden Ansprüche,
**dadurch gekennzeichnet,**
**daß** die Ausgabetemperatur des stückigen oder körnigen Gutes geregelt wird, wozu die momentane Temperatur des Gutes kontinuierlich in der Nähe der Ausgabeöffnung des Kühlschachtes (K) gemessen wird und verflüssigtes Kühlgas zugeführt wird, bis die Differenz der Ist- und Sollwerte der Guttemperatur einen vorgegebenen Minimalwert unterschreitet und erst dann die Kühlschachtausgabe geöffnet wird.

9. Verfahren nach Anspruch 8,
**dadurch gekennzeichnet,**
**daß** die Solltemperatur des auszugebenden stückigen oder körnigen Gutes innerhalb der physikalischen Grenzen des verwendeten Kühlgases oder der verwendeten Kühlgase frei gewählt und eingestellt wird.

10. Vorrichtung zur Kühlung von stückigem oder körnigem Gut, die enthält
a) eine Dosiereinrichtung (D) zur Zusammenstellung einer Dosis des Gutes,
b) einen Kühlschacht (K), mit zumindest anteilig vertikaler Ausrichtung,
c) beide geeignet zur Aufnahme des stückigen oder körnigen Gutes,
wobei
d) die Dosiereinrichtung (D) und der Kühlschacht (K) räumlich getrennt sind,
e) die Vorrichtung zusätzlich enthält
eine Regeleinrichtung (15) zur frei einstellbaren Dosierung
der zuzuführenden Menge des stückigen oder körnigen Gutes, und
f) auf der Ausgabeseite des Kühlschachtes (K)
eine oder mehrere Zuführungen (10)
für ein oder mehrere tiefsiedende, verflüssigte Gase.

11. Vorrichtung gemäß Anspruch 10,
**dadurch gekennzeichnet,**
**daß** die Dosiereinrichtung (D) eine Wägeeinrichtung (4) enthält.

12. Vorrichtung gemäß Anspruch 11,
**dadurch gekennzeichnet,**
- **daß** die Wägeeinrichtung (4) mit der Regeleinrichtung (15) elektronisch verbunden ist, und
- **daß** die Regeleinrichtung (15) die Befüllung der Dosiereinrichtung (D) mit dem stückigen oder körnigen Gut bis zum Erreichen eines frei vorgebbaren Schwellenwertes des Gewichtes automatisch regelt.

13. Vorrichtung gemäß einem der Ansprüche 11 oder 12,
**dadurch gekennzeichnet,**
**daß** die Wägeeinrichtung (4) einen vorzugsweise trichterförmigen Sammelbehälter enthält und frei, ohne mechanischen Kontakt über der Eintrittsöffnung des Kühlschachtes (K) angeordnet ist.

14. Vorrichtung gemäß Anspruch 10,
**dadurch gekennzeichnet,**
**daß** die Dosiereinrichtung (D) eine Meßeinrichtung zur Bestimmung des Schüttgutvolumens enthält

15. Vorrichtung gemäß Anspruch 14,
**dadurch gekennzeichnet,**
**daß** die Volumenmeßeinrichtung als Füllstandsanzeiger ausgebildet ist und mit der Regeleinrichtung (15) elektronisch verbunden ist, und,
**daß** die Regeleinrichtung (15) die Befüllung der Dosiereinrichtung (D) mit dem stückigen oder körnigen Gut bis zum Erreichen eines frei vorgebbaren Schwellenwertes des Füllstandes oder des Volumens automatisch regelt.

16. Vorrichtung gemäß einem der Ansprüche 10 bis 15,
**dadurch gekennzeichnet,**
**daß** der Kühlschacht (K) an seiner Zugabe- und an seiner Ausgabeöffnung mit Verschlüssen (6, 9) versehen ist.

17. Vorrichtung gemäß Anspruch 16,
**dadurch gekennzeichnet,**
**daß** die Verschlüsse (6, 9) als Schieber ausgebildet sind, deren Ein- oder Ausfahren automatisch erfolgt und vorzugsweise elektronisch geregelt ist

18. Vorrichtung gemäß einem der Ansprüche 10 bis 17
**dadurch gekennzeichnet,**
**daß** das Baumaterial zumindest eines Teils der Kühlschachtwandung und/oder der Verschlüsse (6, 9) an den Zugabe- und Ausgabeöffnungen des Kühlschachtes (K) eine geringe Wärmeleitfähigkeit vergleichbar einer Temperaturisolierung besitzt, und/oder,
**daß** zumindest ein Teil der Kühlschachtwandung und/oder der Verschlüsse (6, 9) an den Zugabe- und Ausgabeöffnungen des Kühlschachtes (K) eine zusätzliche Temperaturisolierung aufweist.

19. Vorrichtung gemäß einem der Ansprüche 10 bis 18,
**dadurch gekennzeichnet,**
**daß** der Kühlschacht (K) einen rechteckigen Querschnitt sowie einen oder mehrere Schieber (7, 8) besitzt, derart, daß der Kühlschacht in mehrere separate Kammern aufgeteilt wird, und,
**daß** das Ein- oder Ausfahren der Schieber (7, 8) automatisch erfolgt und vorzugsweise elektronisch geregelt ist.

20. Vorrichtung gemäß Anspruch einem der Ansprüche 17 bis 19,
**dadurch gekennzeichnet,**
**daß** die Bewegung der Schieber (7, 8) elektrisch mittels Schrittmotoren oder pneumatisch oder hydraulisch oder magnetisch erfolgt.

21. Vorrichtung gemäß einem der Ansprüche 19 oder 20,
**dadurch gekennzeichnet,**
**daß** sich in einer oder mehreren der Kammern auf der Ausgabeseite des Kühlschachtes (K) jeweils eine oder mehrere Zuführungen (10) zur Einbringung des oder der verflüssigten Kühlgase und jeweils ein Temperatursensor (14) befinden, sowie eine Austrittsöffnung für das bei der Kühlung verdampfende Kühlgas, welches über eine Zuleitung (12, 13) in die nächst höhergelegene Kammer ohne Flüssiggaskühlung geleitet wird und dort in Form eines dampfförmigen Kühlgases eine Vorkühlung bewirkt.

22. Vorrichtung gemäß einem der Ansprüche 19 bis 21,
**dadurch gekennzeichnet,**
**daß** sich in einer oder mehreren der Kammern auf der Zugabeseite des Kühlschachtes (K) jeweils eine im unteren Bereich der Kammer angeordnete Zuführung zur Einbringung des dampfförmigen Kühlgases befindet sowie im oberen Bereich eine Austrittsöffnung, die über eine Zuleitung (12, 13) zur nächsthöheren Kammer führt oder im Falle der obersten Kammer als Expansionsöffnung (11) dient.

23. Vorrichtung gemäß einem der Ansprüche 21 oder 22,
**dadurch gekennzeichnet,**
**daß** der oder die Temperatursensoren (14), die Zuführungen (10) für das verflüssigte Kühlgas und die automatisch ein- und ausfahrbaren Schieber (2, 5 - 9) sowie die Dosiereinrichtung (D) über eine elektronische Regeleinrichtung (15) miteinander verbunden sind, welche die Zufuhrmenge und Zufuhrzeit des verflüssigten Kühlgases und die Zugabemenge und Zugabezeit des Schüttgutes sowie die Öffnungs- und Schließzeitpunkte der Schieber (2, 5 - 9) in Abhängigkeit von der vorgewählten Sollausgabetemperatur des Schüttgutes regelt.

## Claims

1. Method for cooling lumpy or granular material, in which
a) the lumpy or granular material is fed discontinuously to a cooling shaft (K) and
b) is metered in such a manner
that a batch is collected in a metering device (D), and
c) in at least part of the cooling shaft (K) is cooled at least from time to time with the aid of low-boiling, liquefied gas,
d) the metering and cooling of the lumpy or granular material being spatially separated but taking place in parallel in terms of time, and
e) the metering of the quantity of lumpy or granular material to be supplied being set in a freely selectable manner by means of a control device (15), and
f) the cooling taking place with the aid of one or more low-boiling, liquefied gases.

2. Method according to Claim 1,
**characterized in that**
the quantity of lumpy or granular material is determined by means of its weight.

3. Method according to Claim 1,
**characterized in that**
the quantity of lumpy or granular material is determined by means of its volume.

4. Method according to one of the preceding claims,
**characterized in that**
the lumpy or granular material inside the cooling shaft (K) passes through a plurality of separable chambers and is pre-cooled, in one or more chambers on the feed side of the cooling shaft (K), by means of a first cooling gas which is in vapour form.

5. Method according to Claim 4,
**characterized in that**
the lumpy or granular material is cooled, in one or more chambers on the delivery side of the cooling shaft (K), by means of a second liquefied, low-boiling cooling gas.

6. Method according to one of Claims 4 or 5,
**characterized in that**
the fraction of the liquefied, low-boiling cooling gas which is evaporated during the cooling is used to precool the lumpy or granular material in one or more of the chambers on the feed side of the cooling shaft (K).

7. Method according to one of the preceding claims,
**characterized in that**
the liquefied, low-boiling gas used is nitrogen.

8. Method according to one of the preceding claims,
**characterized in that**
the delivery temperature of the lumpy or granular material is controlled, for which purpose the instantaneous temperature of the material is measured continuously in the vicinity of the delivery opening of the cooling shaft (K) and liquefied cooling gas is supplied until the difference between the actual and desired values of the material temperature falls below a predetermined minimum value, and only then is the cooling shaft outlet opened.

9. Method according to Claim 8, **characterized in that** the desired temperature of the lumpy or granular material to be delivered is selected and set freely within the physical limits of the cooling gas used or of the cooling gases used.

10. Device for cooling lumpy or granular material, which includes
a) a metering device (D) for collecting a batch of the material,
b) a cooling shaft (K), at least part of which is vertically oriented,
c) both being suitable for receiving the lumpy or granular material,
d) the metering device (D) and the cooling shaft (K) being spatially separated,
e) the device additionally
including a control device (15) for the freely adjustable metering of the quantity of lumpy or granular material to be supplied, and
f) one or more feeds (10)
for one or more low-boiling, liquefied gases on the delivery side of the cooling shaft (K).

11. Device according to Claim 10,
**characterized in that**
the metering device (D) includes a weighing device (4).

12. Device according to Claim 11,
**characterized**
- **in that** the weighing device (4) is electronically connected to the control device (15), and
- **in that** the control device (15) automatically controls the filling of the metering device (D) with the lumpy or granular material until a threshold value of the weight, which can be pre-set as desired, is reached.

13. Device according to one of Claims 11 or 12,
**characterized in that**,
the weighing device (4) includes a preferably funnel-shaped collection vessel and is arranged freely, without mechanical contact, above the inlet opening of the cooling shaft (K).

14. Device according to Claim 10,
**characterized in that**,
the metering device (D) includes a measuring device for determining the bulk material volume.

15. Device according to Claim 14,
**characterized in that**,
the volume-measuring device is designed as a level indicator and is electronically connected to the control device (15), and **in that** the control device (15) automatically controls the filling of the metering device (D) with the lumpy or granular material until a threshold value of the level or of the volume, which can be pre-set as desired, is reached.

16. Device according to one of Claims 10 to 15,
**characterized in that**,
the cooling shaft (K) is provided with closures (6, 9) at its feed opening and at its delivery opening.

17. Device according to Claim 16,
**characterized in that**,
the closures (6, 9) are designed as slides, which are retracted or extended automatically, preferably with electronic control.

18. Device according to one of Claims 10 to 17,
**characterized in that**,
the construction material of at least part of the cooling shaft wall and/or of the closures (6, 9) at the feed and delivery openings of the cooling shaft (K) has a low thermal conductivity, similar to that of thermal insulation, and/or **in that** at least part of the cooling shaft wall and/or of the closures (6, 9) at the feed and delivery openings of the cooling shaft (K) have additional thermal insulation.

19. Device according to one of Claims 10 to 18,
**characterized in that**,
the cooling shaft (K) is rectangular in cross section and has one or more slides (7, 8), in such a manner that the cooling shaft is divided into a plurality of separate chambers, and **in that** the slides (7, 8) are retracted or extended automatically, preferably with electronic control.

20. Device according to one of Claims 17 to 19,
**characterized in that**,
the movement of the slides (7, 8) takes place electrically by means of stepper motors or pneumatically or hydraulically or magnetically.

21. Device according to one of Claims 19 or 20,
**characterized in that**,
in one or more of the chambers on the delivery side of the cooling shaft (K) there are in each case one or more feeds (10) for introducing the liquefied cooling gas(es) and in each case one temperature sensor (14), and also an outlet opening for the cooling gas which evaporates during the cooling, this evaporated cooling gas being passed, via a feed line (12, 13), into the next chamber up without liquefied gas cooling, where it effects pre-cooling in the form of a cooling gas in vapour form.

22. Device according to one of Claims 19 to 21,
**characterized in that**,
in one or more of the chambers on the feed side of the cooling shaft (K) there are in each case one feed, which is arranged in the lower region of the chamber, for introducing the cooling gas in vapour form, and also, in the upper region, an outlet opening which, via a feed line (12, 13), leads to the next chamber up or, in the case of the top chambers, serves as an expansion port (11).

23. Device according to one of Claims 21 or 22,
**characterized in that**,
the temperature sensor(s) (14), the feeds (10) for the liquefied cooling gas and the automatically retractable and extendable slides (2, 5-9), and also the metering device (D), are connected to one another via an electronic control device (15) which controls the supply quantity and supply time of the liquefied cooling gas and the addition quantity and addition time of the bulk material, and also the opening and closing times of the slides (2, 5-9) as a function of the preselected desired delivery temperature of the bulk material.

## Revendications

1. Procédé de refroidissement de matériau en morceaux ou en grains, lors duquel
a) l'on achemine de manière discontinue le matériau en morceaux ou en grains dans un puits de refroidissement (K) et lors duquel
b) l'on procède au dosage de manière à constituer, dans un équipement de dosage (D), une dose et
c) à refroidir au moins partiellement celle-ci, dans une partie du puits de refroidissement (K),
d) le dosage et le refroidissement du matériau en morceaux ou en grains se passant d'une manière séparée dans l'espace, mais simultanément d'une manière parallèle dans le temps, et
e) le dosage de la quantité à introduire du matériau en morceaux ou en grains étant réglé d'une manière libre à sélectionner à l'aide d'un équipement de réglage (15) et
f) le refroidissement se faisant à l'aide d'un ou de plusieurs gaz liquéfiés, à point d'ébullition bas.

2. Procédé selon la revendication 1, **caractérisé en ce que** la quantité de matériau en morceaux ou en grains est déterminée par l'intermédiaire de son poids.

3. Procédé selon la revendication 1, **caractérisé en ce que** la quantité du matériau en morceaux ou en grains est déterminée par l'intermédiaire de son volume.

4. Procédé selon l'une quelconque des revendications précédentes, **caractérisé en ce que** le matériau en morceaux ou en grains au sein du puits de refroidissement (K) passe à travers plusieurs chambres séparables et subit un refroidissement préalable à l'aide d'un premier gaz de refroidissement à l'état de vapeur dans une ou plusieurs des chambres du côté introduction du puits de refroidissement (K).

5. Procédé selon la revendication 4, **caractérisé en ce que** le matériau en morceaux ou en grains est refroidi à l'aide d'un deuxième gaz de refroidissement liquéfié, à point d'ébullition bas, dans une ou plusieurs des chambres du côté évacuation du puits de refroidissement (K).

6. Procédé selon l'une quelconque des revendications 4 ou 5, **caractérisé en ce que** la proportion évaporée lors du refroidissement du gaz de refroidissement liquéfié, à point d'ébullition bas, est utilisée en vue du refroidissement préalable du matériau en morceaux ou en grains dans une ou plusieurs des chambres du côté introduction du puits de refroidissement (K).

7. Procédé selon l'une quelconque des revendications précédentes, **caractérisé en ce que** l'on utilise l'azote en tant que gaz liquéfié, à point d'ébullition bas.

8. Procédé selon l'une quelconque des revendications précédentes, **caractérisé en ce que** la température d'évacuation du matériau en morceaux ou en grains est réglée de telle sorte que la température momentanée du matériau est mesurée en continu dans le voisinage de l'ouverture d'évacuation du puits de refroidissement (K) et que du gaz de refroidissement liquéfié est alimenté jusqu'à ce que la différence entre la valeur effective et la valeur de consigne de la température du matériau passe en dessous d'une valeur minimale prédéterminée et **en ce que** c'est seulement à ce moment-là que l'évacuation du puits de refroidissement (K) est ouverte.

9. Procédé selon la revendication 8, **caractérisé en ce que** la température de consigne du matériau en morceaux ou en grains à évacuer est choisie et est réglée librement au sein des limites physiques du gaz ou des gaz de refroidissement utilisés.

10. Dispositif en vue du refroidissement de matériau en morceaux ou en grains, qui comprend
a) un équipement de dosage (D) en vue de la constitution d'une dose du matériau ;
b) un puits de refroidissement (K), ayant une structure au moins en partie verticale,
c) les deux étant appropriés à la réception du matériau en morceaux ou en grains,
d) l'équipement de dosage (D) et le puits de refroidissement (K) étant séparés dans l'espace,
e) le dispositif contenant en outre un équipement de réglage (15) en vue du dosage, réglable librement, de la quantité à alimenter du matériau en morceaux ou en grains et
f) du côté d'évacuation du puits de refroidissement (K), une ou plusieurs admissions (10) pour un ou plusieurs gaz de refroidissement liquéfiés, à point d'ébullition bas.

11. Procédé selon la revendication 10, **caractérisé en ce que** l'équipement de dosage (D) contient un équipement de balance (4).

12. Dispositif selon la revendication 11, **caractérisé en ce**
- **que** l'équipement de balance (4) est relié par voie électronique à l'équipement de réglage (15), et
- **que** l'équipement de réglage (15) règle de manière automatique le remplissage de l'équipement de dosage (D) à l'aide du matériau en morceaux ou en grains jusqu'à l'obtention d'une valeur seuil du poids que l'on peut prédéfinir librement.

13. Dispositif selon l'une quelconque des revendications 11 ou 12, **caractérisé en ce que** l'équipement de balance (4) contient un récipient de collecte, de préférence sous forme d'entonnoir, et est disposé librement, sans contact mécanique, au-dessus de l'ouverture d'entrée du puits de refroidissement (K).

14. Procédé selon la revendication 10, **caractérisé en ce que** l'équipement de dosage (D) contient un équipement de mesure en vue de la détermination du volume du matériau en vrac.

15. Dispositif selon la revendication 14, **caractérisé en ce que** l'équipement de mesure du volume est constitué en tant qu'indicateur d'état plein et qu'il est relié par voie électronique à l'équipement de réglage (15), et **en ce que** l'équipement de réglage (15) règle de manière automatique le remplissage de l'équipement de dosage (D) à l'aide du matériau en morceaux ou en grains jusqu'à l'obtention d'une valeur seuil, que l'on peut prédéfinir librement, de l'état de remplissage ou du volume.

16. Dispositif selon l'une quelconque des revendications 10 à 15, **caractérisé en ce que** le puits de refroidissement (K) est pourvu de dispositifs de fermeture (6, 9) sur l'ouverture d'introduction et sur l'ouverture d'évacuation.

17. Dispositif selon la revendication 16, **caractérisé en ce que** les dispositifs de fermeture (6, 9) sont réalisés en tant que plaques coulissantes, dont le déploiement et la rétraction se font automatiquement et sont réglés de préférence par voie électronique.

18. Dispositif selon l'une quelconque des revendications 10 à 17, **caractérisé en ce que** le matériau de construction d'au moins une partie de la paroi du puits de refroidissement et/ou des dispositifs de fermeture (6, 9) sur les ouvertures d'introduction et d'évacuation du puits de refroidissement (K), possède une conductibilité thermique faible similaire à celle d'une isolation thermique, et/ou **en ce qu'**au moins une partie de la paroi du puits de refroidissement et/ou des dispositifs de fermeture (6, 9), sur les ouvertures d'introduction et d'évacuation du puits de refroidissement (K), présente une isolation thermique supplémentaire.

19. Dispositif selon l'une quelconque des revendications 10 à 18, **caractérisé en ce que** le puits de refroidissement (K) possède une section transversale rectangulaire ainsi qu'une ou plusieurs plaques coulissantes (7, 8), de telle manière que le puits de refroidissement puisse être subdivisé en plusieurs chambres séparées, et **en ce que** le déploiement ou la rétraction des plaques coulissantes (7, 8) se fait automatiquement et est réglé(e) de préférence par voie électronique.

20. Dispositif selon l'une quelconque des revendications 17 à 19, **caractérisé en ce que** le mouvement des plaques coulissantes (7, 8) se fait de manière électrique à l'aide de moteurs pas à pas ou de manière pneumatique ou hydraulique ou magnétique.

21. Dispositif selon l'une quelconque des revendications 19 ou 20, **caractérisé en ce que**, dans une ou plusieurs des chambres sur le côté introduction du puits de refroidissement (K), se trouvent, à chaque fois, une ou plusieurs admissions (10) en vue de l'introduction du ou des gaz de refroidissement liquéfié(s) et, à chaque fois, un détecteur de température (14), ainsi qu'une ouverture de sortie pour le gaz de refroidissement à évaporer lors du refroidissement, qui est acheminé, par l'intermédiaire d'un conduit (12, 13), dans la chambre immédiatement supérieure sans refroidissement du gaz liquéfié et qui y provoque un refroidissement préalable sous la forme d'un gaz de refroidissement à l'état de vapeur.

22. Dispositif selon l'une quelconque des revendications 19 à 21, **caractérisé en ce que**, dans une ou plusieurs des chambres du côté d'introduction du puits de refroidissement (K), se trouvent, à chaque fois, une admission disposée dans le domaine inférieur de la chambre, en vue de l'introduction du gaz de refroidissement à l'état de vapeur ainsi que, dans le domaine supérieur, une ouverture de sortie, qui conduit, par l'intermédiaire d'un conduit (12, 13), à la chambre immédiatement supérieure ou, dans le cas de la chambre la plus élevée, sert d'ouverture de détente (11).

23. Dispositif selon l'une quelconque des revendications 21 ou 22, **caractérisé en ce que** le ou les détecteurs de température (14), les admissions (10) pour le gaz de refroidissement liquéfié et les plaques coulissantes capables d'un déploiement et d'une rétraction automatiques (2, 5-9) ainsi que l'équipement de dosage (D) sont reliés les uns aux autres par l'intermédiaire d'un équipement de réglage électronique (15), qui règle la quantité d'apport du matériau en vrac et le temps d'apport du gaz de refroidissement liquéfié et la quantité d'introduction et le temps d'introduction du matériau en vrac ainsi que les points d'ouverture et de fermeture des plaques coulissantes (2, 5-9), en fonction de la température présélectionnée d'évacuation de consigne du matériau en vrac.
